# EUROPÄISCHE PATENTSCHRIFT

(11) **EP 0 789 058 B1**
(45) Veröffentlichungstag und Bekanntmachung des Hinweises auf die Patenterteilung: **29.09.1999**
(21) Anmeldenummer: 97101666.2
(22) Anmeldetag: 04.02.1997
(51) Int. Cl.: C08L 71/12, C08L 23/06, C08L 25/06

(54) **Formmasse auf der Grundlage eines Ethylenpolymerisates hoher Dichte**
Moulding composition based on a ethylenpolymer with high density
Composition à mouler à base de polymére de l'éthylène haute densite

(30) Priorität: 08.02.1996 DE 19604508
(43) Veröffentlichungstag der Anmeldung: 13.08.1997
(73) Patentinhaber: Buna Sow Leuna Olefinverbund GmbH, 06258 Schkopau (DE)
(72) Erfinder: Schellenberg, Jürgen, Dr., 06132 Halle (DE); Kerrinnes, Heinz-Jürgen, Dr., 06128 Halle (DE); Fritzsche, Gerd, 06217 Merseburg (DE); Nagel, Marion, 06217 Merseburg (DE)

(56) Entgegenhaltungen:
- EP-A- 0 358 898
- US-A- 4 483 958
- PATENT ABSTRACTS OF JAPAN vol. 017, no. 339 (C-1075), 28.Juni 1993 & JP 05 039416 A (ASAHI CHEM IND CO LTD), 19.Februar 1993, & DATABASE WPI Derwent Publications Ltd., London, GB; AN 93-096873

## Beschreibung

Die Erfindung betrifft eine Formmasse auf der Grundlage eines Ethylenpolymerisates hoher Dichte (HDPE) zur Herstellung von Platten, Folien oder anderen Formkörpern beispielsweise durch Extrusion oder Spritzgießen.

Es ist bekannt, daß für die Herstellung von geformten Körpern mit einer gewünscht hohen Maßhaltigkeit und Dimensionsstabilität während des Verarbeitungsvorganges bevorzugt Formmassen, die sich durch eine besonders geringe Verarbeitungsschwindung auszeichnen, Verwendung finden.
Da Ethylenpolymerisate hoher Dichte eine relativ hohe Verarbeitungsschwindung aufweisen, sind solche Formmassen auf der Grundlage eines Ethylenpolymerisates hoher Dichte mit geringer Verarbeitungsschwindung besonders gewünscht. Eine bekannte Möglichkeit zur Herstellung von Polyethylen-Formmassen mit geringer Verarbeitungsschwindung ist das Abmischen von Ethylenpolymerisaten mit Polyvinylchlorid ggf. unter Verwendung von Verträglichkeitsvermittlern wie chlorierten Polyethylen (D.R.Paul, S.Newman: Polymer Blends Academic Press New York, San Francisco, London 1978, Vol. 2, S. 53 ff.). Solche Formmassen besitzen jedoch den Nachteil, daß sie eine völlig unzureichende Wärmeformbeständigkeit aufweisen.
Andererseits sind Polyethylen-Formmassen mit geringerer Verarbeitungsschwindung zugänglich, die durch Mischen mit polyvinylaromatischen Verbindungen wie Polystyrol unter Einsatz von Verträglichkeitsvermittlern bzw. Pfropfpolymerisaten hergestellt werden können (z.B. JP 56036534). Diese Formmassen zeigen zwar gegenüber den oben genannten Mischungen verbesserte Eigenschaften, weisen aber gleichfalls aufgrund der Komponenten eine für viele Anwendungsgebiete noch unzureichende Wärmeformbeständigkeit auf.
Der Erfindung liegt deshalb die Aufgabe zugrunde, eine HDPE-Formmasse mit geringer Verarbeitungsschwindung bei guter Wärmeformbeständigkeit und Flexibilität sowie einem ausgewogenen Eigenschaftsbild bei guter Verarbeitbarkeit zu entwickeln.

Erfindungsgemäß enthält die HDPE-Formmasse
A) 93 bis 21 Masseprozent eines Ethylenhomo- oder -copolymerisates hoher Dichte mit einer Dichte bei 23 °C von 0,935 g/cm³ bis 0,970 g/cm³,
B) 0,5 bis 54 Masseprozent eines Polyphenylenethers mit einer massenmittleren Molmasse von 35 000 g/mol bis 70 000 g/mol,
C) 0,5 bis 54 Masseprozent eines Polystyrols mit einer massenmittleren Molmasse von 100 000 g/mol bis 600 000 g/mol,
D) 3 bis 20 Masseprozent eines hydrierten Styrol-Isopren-Styrol-Triblockcopolymerisates mit einem Styrolanteil von 10 bis 70 Masseprozent, bezogen auf das Triblockcopolymerisat,
E) 0 bis 5 Masseprozent eines weiteren Olefinhomo- oder -copolymerisates und
F) 0,1 bis 15 Masseprozent üblicher Kunststoffadditive einschließlich Stabilisatoren und Weichmacher.

Der Erfindung gemäß kann die Formmasse als Komponente A) ein Ethylenhomo- oder - copolymerisat bzw. ein Gemisch mit einer Dichte bei 23 °C von 0,937 g/cm³ bis 0,965 g/cm³ enthalten.

Die Komponente B) kann erfindungsgemäß ein Polyphenylenether bzw. Polyphenylenethergemisch mit einer massenmittleren Molmasse von 40 000 g/mol bis 65 000 g/mol sein.

Entsprechend der Erfindung kann als Komponente C) ein Polystyrol bzw. Polystyrolgemisch mit einer massenmittleren Molmasse von 150 000 g/mol bis 500 000 g/mol dienen.

Erfindungsgemäß kann die Formmasse als Komponente D) ein hydriertes Styrol-Isopren-Styrol-Triblockcopolymerisat bzw. -gemisch mit einem Styrolanteil von 12 bis 55 Masseprozent, bezogen auf das Triblockcopolymerisat, enthalten.

Als Komponente E) kann gemäß der Erfindung 0,1 bis 4 Masseprozent eines Polypropylens verwendet werden.

Der Erfindung entsprechend kann als Komponente C) ein Polystyrol bzw. Polystyrolgemisch mit einem Anteil von bis zu 12 Masseprozent, bezogen auf die Komponente C), eines gepfropften Elastomers eingesetzt werden.

Erfindungsgemäß kann die HDPE-Formmasse durch ein- oder mehrstufiges Mischen und Granulieren der genannten Ausgangskomponenten hergestellt werden.

Die entwickelte Formmasse auf der Grundlage eines Ethylenpolymerisates hoher Dichte zeichnet sich bei geringer Verarbeitungsschwindung durch ein gezielt eingestelltes und ausgewogenes Eigenschaftsbild, insbesondere eine gute Wärmeformbeständigkeit bei hoher Flexibilität und guter Verarbeitbarkeit aus.

Nachfolgend soll die Erfindung an einigen ausgewählten Ausführungsbeispielen näher erläutert werden.

### Beispiel 1 (Vergleichsbeispiel)

Ein durch Polymerisation nach dem Gasphasenverfahren hergestelltes Ethylencopolymerisat hoher Dichte wurde mit den in der Tabelle 1 aufgeführten Eigenschaften als Komponente A verwendet. Es wurde zusammen mit 0,3 Masseprozent eines Stabilisatorgemisches aus 44 Masseprozent Pentaerythrityltetrakis- [3- (3,5-di-tert.-butyl-4-hydroxyphenyl) propionat] und 56 Masseprozent Tris-(2,4-di-tert.-butylphenyl) phosphit sowie 0,1 Masseprozent Calciumstearat (siehe Tabelle 2) auf einem Zweischneckenextruder mit einem Schneckendurchmesser von 25 mm bei einer Schmelzetemperatur von 220 °C homogenisiert und granuliert.

An dem erhaltenen Granulat wurden die in der Tabelle 3 angeführten Kennwerte bezüglich des Schmelzindex MFI bei einer Temperatur von 190 °C und einer Belastung von 212 N gemäß DIN 53735 sowie die Dichte bei einer Temperatur von 23 °C nach DIN 53479 bestimmt.
An normgerechten Prüfkörpern, die aus dem erhaltenen Granulat hergestellt wurden, konnten die in der Tabelle 4 zusammengefaßten anwendungstechnischen Kennwerte ermittelt werden. Hierzu gehören die Verarbeitungsschwindung an gespritzten Prüfplatten der Abmessung 60 mm x 60 mm x 2 mm nach DIN 53464, Zug-E-Modul und Biege-E-Modul nach DIN 53457, die Biegespannung bei einer Randfaserdehnung von 3,5 % nach DIN 53452 und die Vicat-Erweichungstemperatur nach ISO 306.

### Beispiel 2 (Vergleichsbeispiel)

Entsprechend den Angaben der Tabelle 2 wurde eine Mischung aus den Komponenten A, D und E unter Zugabe geeigneter Kunststoffadditive (Komponente F) unter den Bedingungen des Beispieles 1 hergestellt.
Die Komponente A entsprach dem in Beispiel 1 eingesetzten Polymerisat. Als Komponente D fand ein hydriertes Styrol-Isopren-Styrol-Triblockcopolymerisat und als Komponente E ein Polypropylen mit den in der Tabelle 1 angegebenen Eigenschaften Verwendung.
Die Komponente F enthielt 13,1 Masseprozent des Stabilisatorgemisches aus Beispiel 1, 4,4 Masseprozent Calciumstearat sowie 82,5 Masseprozent Paraffinöl.
Die Prüfergebnisse der hergestellten Formmasse sind in der Tabelle 3 bezüglich Schmelzindex und Dichte und in Tabelle 4 bezüglich Verarbeitungsschwindung, Zug-E-Modul, Biege-E-Modul, Biegespannung bei einer Randfaserdehnung von 3,5 % sowie Vicat-Erweichungstemperatur zusammengefaßt.

### Beispiel 3

In diesem Beispiel wurde eine Formmasse aus einem Ethylencopolymerisat hoher Dichte (Komponente A), einem Polyphenylenether (Komponente B), einem Polystyrol (Komponente C), einem hydrierten Styrol-Isopren-Styrol-Triblockcopolymerisat (Komponente D), einem weiteren Olefinpolymerisat (Komponente E) sowie Additiven (Komponente F) entsprechend den erfindungsgemäßen Anforderungen hergestellt.
Dabei wurde entsprechend den in Tabelle 2 angegebenen Zusammensetzungen unter Zugrundelegung der in Tabelle 1 aufgeführten Komponenten und deren Eigenschaften entsprechend den Angaben des Beispiels 2 verfahren. Die Komponente F enthielt dabei 87,9 Masseprozent Paraffinöl, 9,1 Masseprozent des Stabilisatorgemisches aus Beispiel 1 sowie 3,0 Masseprozent Calciumstearat.
Für die hergestellte Formmasse sind Schmelzindex und Dichte in Tabelle 3 und die weiteren anwendungstechnischen Kennwerte in Tabelle 4 aufgeführt.
Aus den Ergebnissen ist ersichtlich, daß sich die erfindungsgemäß hergestellte Formmasse gegenüber denen der Vergleichsbeispiele 1 und 2 durch eine wesentlich geringere Verarbeitungsschwindung bei guter Wärmeformbestandigkeit und Flexibilität sowie guter Verarbeitbarkeit auszeichnet.

### Beispiel 4

Analog dem Beispiel 3 wurde eine erfindungsgemäße Formmasse aus den Komponenten A, B, C, D, E und F gefertigt.
Die Zusammensetzung der Formmasse ist aus der Tabelle 2 ersichtlich, wobei die Komponente F aus 90,4 Masseprozent Paraffinöl, 7,22 Masseprozent des in Beispiel 1 genannten Stabilisatorgemisches und 2,38 Masseprozent Calciumstearat bestand. Die Eigenschaften dieser Formmasse sind gleichfalls in den Tabellen 3 und 4 angegeben. Sie zeichnet sich gegenüber der in Beispiel 3 hergestellten Formmasse durch eine noch geringere Verarbeitungsschwindung aus.

### Beispiel 5

Hier wurde ebenfalls nach den Angaben des Beispiels 3 entsprechend der in Tabelle 2 genannten Zusammensetzung verfahren.
Die Komponente F setzte sich dabei aus 85,45 Masseprozent Paraffinöl, 3,66 Masseprozent Calciumstearat und 10,89 Masseprozent des Stabilisatorgemisches aus Beispiel 1 zusammen.

Die an der Formmasse gemessenen Eigenschaften (siehe Tabelle 3 und 4) weisen gleichfalls auf die verringerte Verarbeitungsschwindung der erfindungsgemäß hergestellten Formmasse bei guter Flexibilität, Wärmeformbeständigkeit und Verarbeitbarkeit gegenüber den Formmassen der Vergleichsbeispiele hin.

### Beispiel 6

Auch in diesem Beispiel wurde die Formmasse unter den Bedingungen des Beispiels 3 mit den dort aufgeführten Ausgangskomponenten nach den in Tabelle 2 vorgegebenen Mengen hergestellt.
93,98 Masseprozent Paraffinöl, 4,51 Masseprozent des in Beispiel 1 beschriebenen Stabilisatorgemisches und 1,51 Masseprozent Calciumstearat enthielt die Komponente F in diesem Fall.
In den Tabellen 3 und 4 sind die an der Formmasse ermittelten Prüfwerte aufgeführt. Es ist ersichtlich, daß sich die erfindungsgemäß gefertigte Formmasse durch eine besonders geringe Verarbeitungsschwindung bei guter Flexibilität und Verarbeitbarkeit sowie durch eine wesentlich verbesserte Wärmeformbeständigkeit auszeichnet.

### Beispiel 7 (Vergleichsbeispiel)

Die Formmasse wurde analog dem Beispiel 3, jedoch unter Zugrundelegung der in der Tabelle 2 angegebenen nicht erfindungsgemäßen Zusammensetzung hergestellt. Die Komponente F enthielt 97,93 Masseprozent Paraffinöl, 0,51 Masseprozent Calciumstearat sowie 1,56 Masseprozent des Stabilisatorgemisches aus Beispiel 1.
Wie die Ergebnisse der Prüfungen in den Tabellen 3 und 4 belegen, konnte zwar die Verarbeitungsschwindung gegenüber dem Beispiel 6 etwas verringert werden, die Flexibilität der Formmasse wurde jedoch stark eingeschränkt. Außerdem war die auf diese Weise hergestellt Formmasse nicht in gewünschter Weise verarbeitbar.

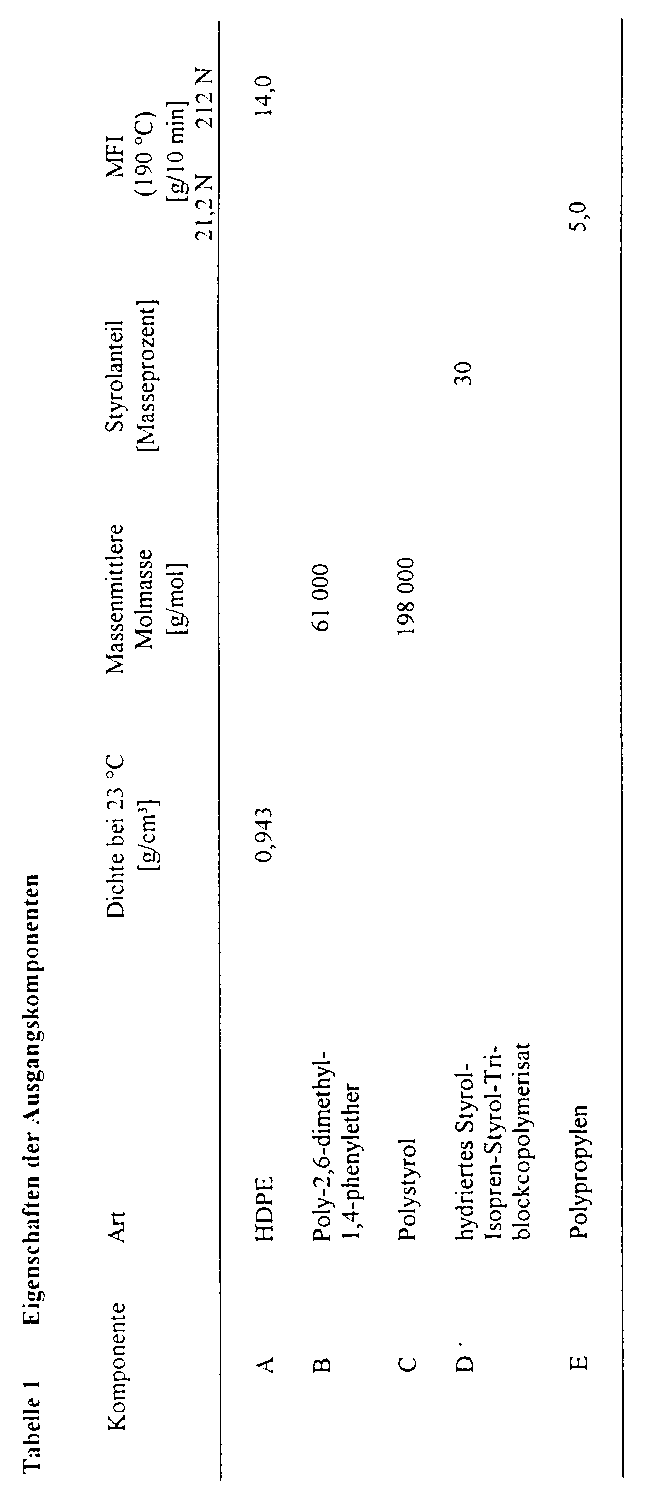

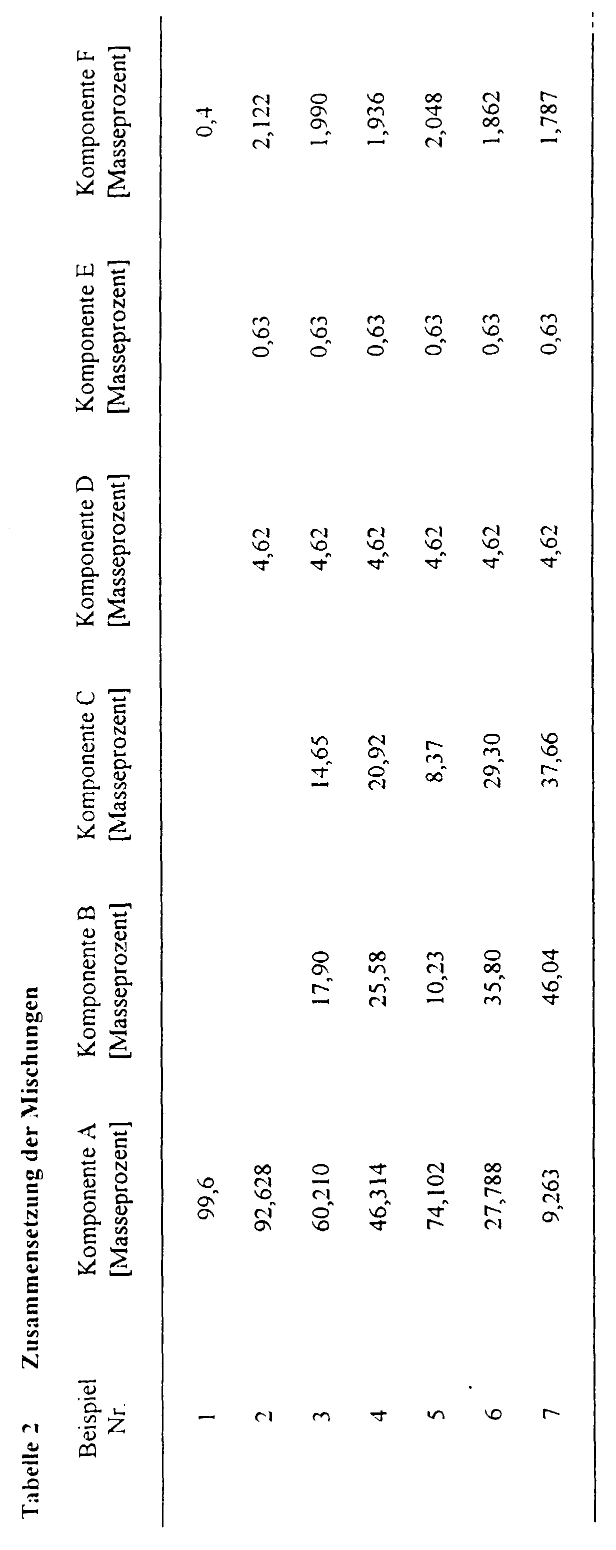

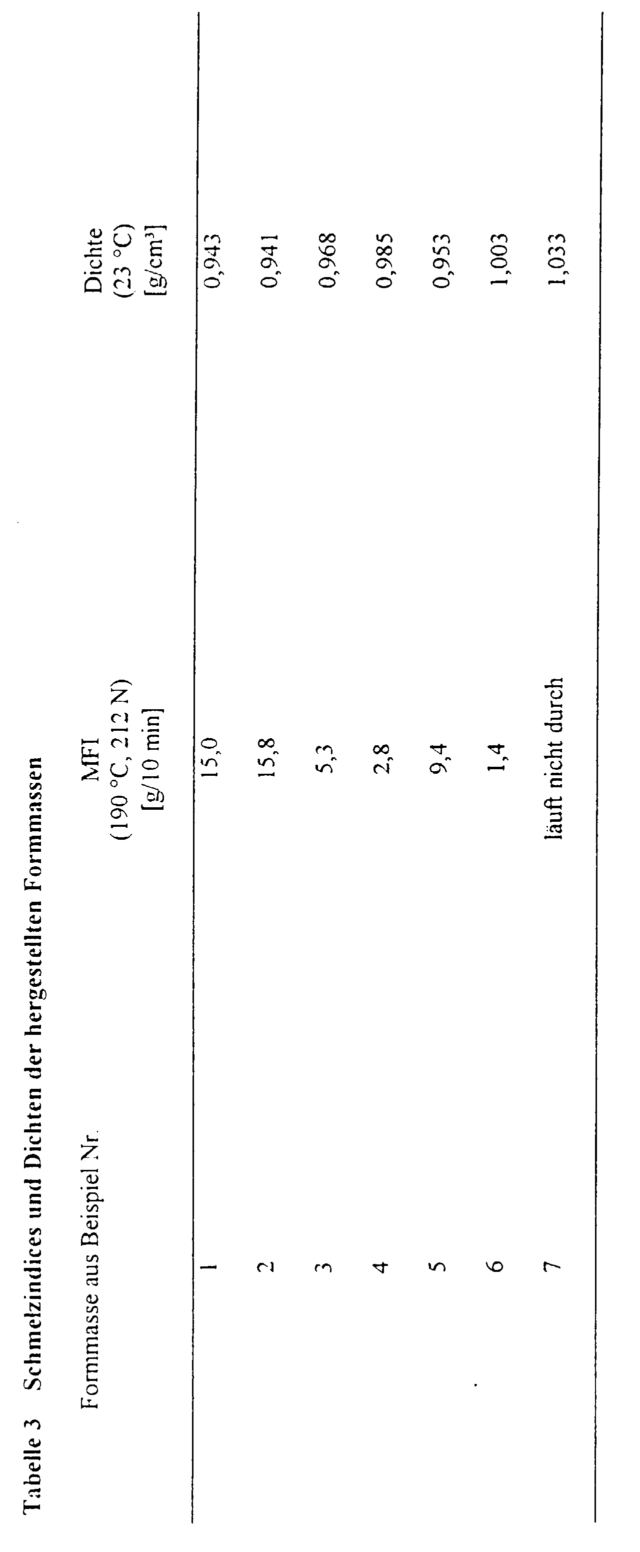

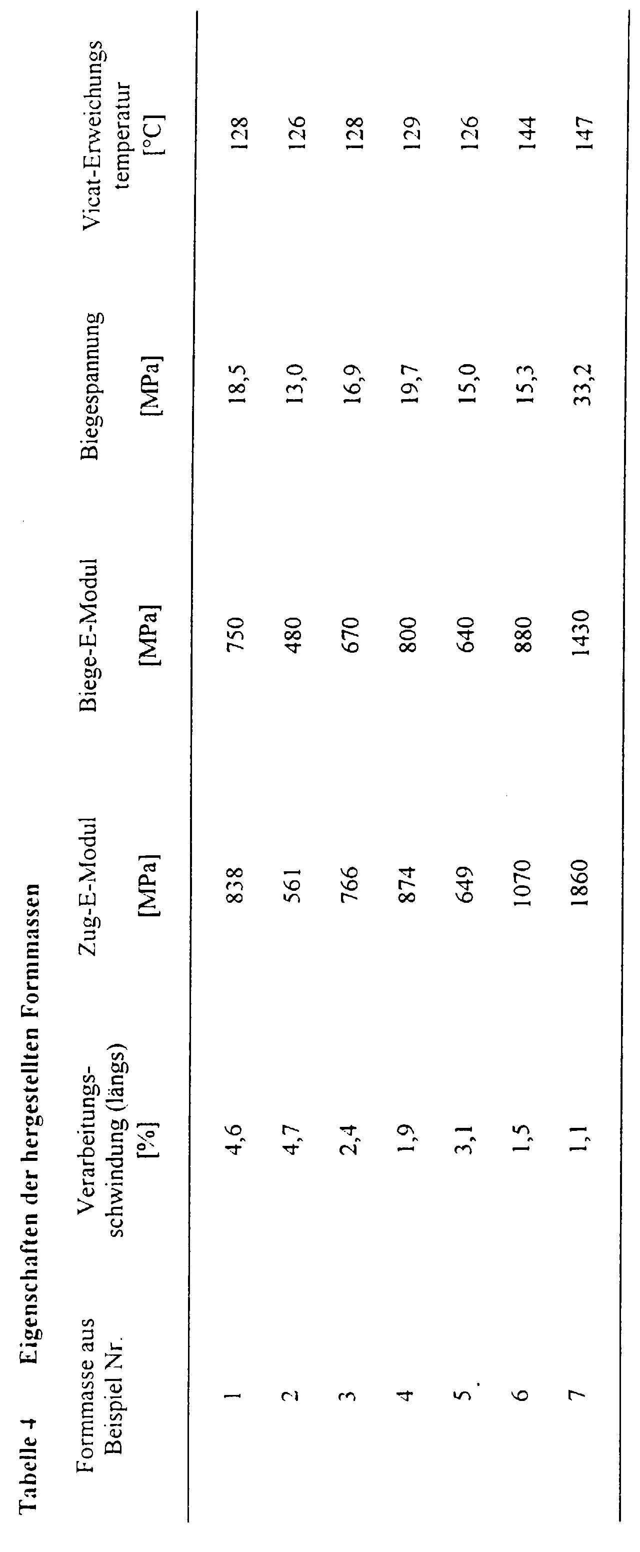

## Patentansprüche

1. Formmasse auf der Grundlage eines Ethylenpolymerisates hoher Dichte, enthaltend
A) 93 bis 21 Masseprozent eines Ethylenhomo- oder copolymerisates mit einer Dichte bei 23 °C von 0,935 g/cm³ bis 0,970 g/cm³,
B) 0,5 bis 54 Masseprozent eines Polyphenylenethers mit einer massenmittleren Molmasse von 35 000 g/mol bis 70 000 g/mol,
C) 0,5 bis 54 Masseprozent eines Polystyrols mit einer massenmittleren Molmasse von 100 000 g/mol bis 600 000 g/mol,
D) 3 bis 20 Masseprozent eines hydrierten Styrol-Isopren-Styrol-Triblockcopolymerisates mit einem Styrolanteil von 10 bis 70 Masseprozent, bezogen auf das Triblockcopolymerisat,
E) 0 bis 5 Masseprozent eines weiteren Olefinhomo- oder -copolymerisates und
F) 0,1 bis 15 Masseprozent üblicher Kunststoffadditive einschließlich Stabilisatoren und Weichmacher.

2. Formmasse nach Anspruch 1, enthaltend als Komponente A) ein Ethylenhomo- oder -copolymerisat bzw. ein Gemisch mit einer Dichte bei 23 °C von 0,937 g/cm³ bis 0,965 g/cm³.

3. Formmasse nach Anspruch 1, enthaltend als Komponente B) ein Polyphenylenether bzw. Polyphenylenethergemisch mit einer massenmittleren Molmasse von 40 000 g/mol bis 65 000 g/mol.

4. Formmasse nach Anspruch 1, enthaltend als Komponente C) ein Polystyrol bzw. Polystyrolgemisch mit einer massenmittleren Molmasse von 150 000 g/mol bis 500 000 g/mol.

5. Formmasse nach Anspruch 1, enthaltend als Komponente D) ein hydriertes Styrol-Isopren-Styrol-Triblockcopolymerisat bzw. -gemisch mit einem Styrolanteil von 12 bis 55 Masseprozent, bezogen auf das Triblockcopolymerisat.

6. Formmasse nach Anspruch 1, enthaltend als Komponente E) 0,1 bis 4 Masseprozent eines Polypropylens.

7. Formmasse nach Anspruch 1 und 4, enthaltend als Komponente C) ein Polystyrol bzw. Polystyrolgemisch mit einem Anteil von bis zu 12 Masseprozent, bezogen auf die Komponente C), eines gepfropften Elastomers.

8. HDPE-Formmasse nach den Ansprüchen 1 bis 7, hergestellt durch ein- oder mehrstufiges Mischen und Granulieren der genannten Ausgangskomponenten.

## Claims

1. High-density polyethylene-based moulding compound containing
A) 93 to 21 % by weight of an ethylene homopolymer or copolymer of high density with a density from 0.935 g/cm³ to 0.970 g/cm³ at 23 °C.
B) 0.5 to 54 % by weight of a polyphenylene ether with a weight-average molecular weight from 35,000 g/mol to 70,000 g/mol,
C) 0.5 to 54 % by weight of a polystyrene with a weight-average molecular weight from 100,000 g/mol to 600,000 g/mol,
D) 3 to 20 % by weight of a hydrated styrene/isoprene/styrene triblock copolymer with a styrene content ranging from 10 to 70 % by weight, related to the triblock copolymer,
E) 0 to 5 % by weight of another olefin homopolymer or olefin copolymer and
F) 0.1 to 15 % by weight of common plastic additives including stabilisers and plasticisers.

2. Moulding compound according to claim 1 containing as component A) an ethylene homopolymer or an ethylene copolymer or a mixture of both with a density from 0.937 g/cm³ to 0.965 g/cm³ at 23 °C.

3. Moulding compound according to claim 1 containing as component B) a polyphenylene ether or polyphenylene ether mixture with a weight-average molecular weight from 40,000 g/mol to 65,000 g/mol.

4. Moulding compound according to claim 1 containing as component C) a polystyrene or a polystyrene mixture with a weight-average molecular weight from 150,000 g/mol to 500,000 g/mol.

5. Moulding compound according to claim 1 containing as component D) a hydrogenated styrene/isoprene/styrene triblock copolymer or a mixture with a styrene content between 12 to 55 % by weight, related to the triblock copolymer.

6. Moulding compound according to claim 1, containing as component E) 0.1 to 4 % by weight of a polypropylene.

7. Moulding compound according to claims I and 4, containing as component C) a polystyrene or a polystyrene mixture with a content of up to 12 % by weight of a grafted elastomer related to the component C).

8. HDPE moulding compound according to claims 1 to 7 made by one-stage or multi-stage mixing and pelletising of the mentioned starting components.

## Revendications

1. Matière B mouler à base d'un polymère d'éthylène de haute densité contenant
A) de 93 à 21 pour cent en poids d'un homopolymère ou copolymère d'éthylène de haute densité ayant une densité à 23 °C de 0,935 g/cm³ jusqu'à 0,970 g/cm³,
B) de 0,5 à 54 pour cent en poids d'un éther polyphénylique avec une masse moléculaire moyenne en poids de 35 000 g/mol jusqu'à 70 000 g/mol,
C)de 0,5 à 54 pour cent en poids d'un polystyrène avec une masse moléculaire moyenne en poids de 100 000 g/mol jusqu'à 600 000 g/mol,
D) de 3 à 20 pour cent en poids d'un copolymère tribloc hydrogéné de styrène-isoprène-styrène avec une part de styrène de 10 à 70 pour cent en poids, par rapport au copolymère tribloc,
E) de 0 à 5 pour cent en poids d'un autre homopolymère ou copolymère à l'oléfine et
F) de 0,1 à 15 pour cent en poids d'additifs synthétiques usuels y compris stabilisants et plastifiants.

2. Matière B mouler selon la spécification 1, contenant comme constituant A) un homopolymère ou copolymère d'éthylène ou un mélange d'une densité à 23 °C de 0,937 g/cm³ à 0,965 g/cm³.

3. Matière B mouler selon la spécification 1, contenant comme constituant B) un éther de polyphénylène ou un mélange d'éther de polyphénylène avec une masse moléculaire moyenne en poids de 40 000 g/mol jusqu'à 65 000 g/mol.

4. Matière B mouler selon la spécification 1, contenant comme constituant C) un polystyrène ou un mélange de polystyrène avec une masse moléculaire moyenne en poids de 150 000 g/mol jusqu'à 500 000 g/mol.

5. Matière B mouler selon la spécification 1, contenant comme constituant D) un copolymère tribloc hydrogéné de styrène-isoprène-styrène ou un mélange de ce copolymère avec une part de styrène de 12 à 55 pour cent en poids, par rapport au copolymère tribloc.

6. Matière B mouler selon la spécification 1, contenant comme constituant E) un polypropylène de 0,1 à 4 pour cent en poids.

7. Matière B mouler selon les spécifications 1 et 4, contenant comme constituant C) un polystyrène ou un mélange de polystyrène avec une part de jusqu'à 12 pour cent en poids d'un élastomère greffé par rapport au constituant C).

8. Matière B mouler en PEhd selon les spécifications de 1 à 7, produite par malaxage et granulation à un et à plusieurs étages des composants de départ cités.
